# EUROPEAN PATENT APPLICATION

(11) **EP 1 684 198 A2**
(43) Date of publication of application: **26.07.2006**
(21) Application number: 05254911.0
(22) Date of filing: 05.08.2005
(51) Int. Cl.: G06F 17/30

(54) **Digital photo managing apparatus and method, and computer recording medium storing program for executing the method**

(30) Priority: 20.01.2005 KR 2005005539
(71) Applicant: Samsung Electronics Co., Ltd., Yeongtong-gu Suwon-city, Gyeonggi-do 442-742 (KR)
(72) Inventor: Hyun-jin, Kim, Seo-gu, Gwangju-si (KR); Sung-jung, Cho 249-403 Hwanggol Mael 2-danji Apt., Suwon-si, Gyeonggi-do (KR)
(74) Representative: Greene, Simon Kenneth

(57) **Abstract**

Provided are a digital photo managing apparatus and method, and a recording medium readable by computer storing computer program. The digital photo managing apparatus includes: an attribute information generating unit which generates predetermined attribute information for each of the given photo data; a storage unit which stores the attribute information and the given photo data by having the attribute information as an address; an attribute information inserting unit which inserts the attribute information in the given photo data, and prints the photo data including the attribute information to generate a photo; a reading unit which reads the photo and detects the attribute information; and a photo data searching unit which reads out the stored photo data which has an attribute information with a pre-set degree of association with the detected attribute information as an address from the stored photo data. Thus, the predetermined photo data can be read despite damages to a portion of the digital photo, photo data related to the photo data of the digital photo can be easily searched, and images of the searched photo data can be displayed according to the intensions of the user.

## Description

### BACKGROUND OF THE INVENTION

The present invention relates to a photo management apparatus and method, and more particularly, to a digital photo management apparatus and method for searching related photo data of a given photo from stored photo data by comparing attribute information set for each of the stored photo data with attribute information of a code printed on the given photo.

Unlike analog cameras, digital cameras do not need films, storage media for digital cameras can store a large number of photos than compared to the films, and digital photos can be easily developed. As a result, digital cameras have become ubiquitous today.

Generally, a user manages digital photos by storing data of tens to thousands of photos in a predetermined storage medium and frequently up-loading the digital photos to the user's computer.

Since not all of the digital photos stored in the storage medium are of good quality, the user usually prints only some photo data from among stored photo data when developing the digital photos.

As a result, photos that are not printed and have been up-loaded to the computers a long time ago can easily be forgotten by the user.

If the user wishes to see a specific digital photo, the user has to search the digital photos up-loaded and stored in the computer. Here, the user faces the difficulty of having to individually search all the digital photos stored in the computer.

That is, a conventional digital photo management apparatus does not allow the user to easily look for a specific digital photo. This problem is more apparent for digital photos taken a long time ago.

When there is a plurality of searched images, the user may wish to display the images according to the user's intentions, for example, display all the images taken on the same day or all the images taken of the same person on a display screen. However, a conventional display device does not allow the user to display the searched plurality of images according to the user's intension.

In other words, the conventional display device displays files only in a pre-set method such as in the order of file names or dates. Therefore, the conventional digital photo management apparatus cannot display the searched images according to a user's intention.

### SUMMARY OF THE INVENTION

According to an aspect of the present invention, there is provided a digital photo managing apparatus including: an attribute information generating unit which generates predetermined attribute information for each given photo data; a storage unit which stores the attribute information and the given photo data by having the attribute information as an address; an attribute information inserting unit which inserts the attribute information in the given photo data, and prints the photo data including the attribute information to generate a photo; a reading unit which reads the photo and detects the attribute information; and a photo data searching unit which reads out the stored photo data which has an attribute information with a pre-set degree of association with the detected attribute information as an address from the stored photo data.

The attribute information generating unit may generate unique IDs as the attribute information or may generate contents, which is information of the given photo data, as the attribute information.

The digital photo managing may further include a display unit which displays an image of at least one of the read out photo data.

According to another aspect of the present invention, there is provided a digital photo managing method. The method includes: generating predetermined attribute information for each of the given photo data; storing the attribute information and the given photo data by having the attribute information as an address; inserting the attribute information in the given photo data, and generating a photo by printing the photo data including the attribute information; detecting the attribute information by reading the photo; and reading out the stored photo data which has an attribute information with a pre-set degree of association with the detected attribute information as an address from the stored photo data.

According to another aspect of the present invention, there is provided a computer recording medium storing a computer program for performing a digital photo managing method. The method includes: generating predetermined attribute information for each of the given photo data; storing the attribute information and the given photo data by having the attribute information as an address; inserting the attribute information in the given photo data, and generating a photo by printing the photo data including the attribute information; detecting the attribute information by reading the photo; and reading out the stored photo data which has an attribute information with a pre-set degree of association with the detected attribute information as an address from the stored photo data.

The present invention provides a digital photo management apparatus for searching related photo data of a given photo from stored photo data by comparing attribute information set for each of the stored photo data with attribute information of a code printed on the given photo.

The present invention also provides a digital photo management method of searching related photo data of a given photo from stored photo data by comparing attribute information set for each of the stored photo data with attribute information of a code printed on the given photo.

The present invention also provides a computer recording medium having recorded thereon a computer program for searching related photo data of a given photo from stored photo data by comparing attribute information set for each of the stored photo data with attribute information of a code printed on the given photo.

### BRIEF DESCRIPTION OF THE DRAWINGS

The above and other features and advantages of the present invention will become more apparent by describing in detail exemplary embodiments thereof with reference to the attached drawings in which:
FIG. 1 is a block diagram of a digital photo management apparatus according to an embodiment of the present invention;
FIG. 2 is a flow chart illustrating a method of printing a digital photo according to an embodiment of the present invention;
FIG. 3 is a flow chart illustrating a method of searching a digital photo according to an embodiment of the present invention; and
FIG. 4 is a flow chart illustrating a method of displaying a digital photo according to an embodiment of the present invention.

### DETAILED DESCRIPTION OF THE INVENTION

A digital photo management apparatus and method, and a computer recording medium having recorded thereon a computer program for executing the method will now be described more fully with reference to the accompanying drawings, in which exemplary embodiments of the invention are shown. The terminology that follows is defined according to the functions of devices in the present invention and may change according to, for example, conventional usage or the intentions of a user or operator. Therefore, definitions should be derived based on the overall contents of the present application.

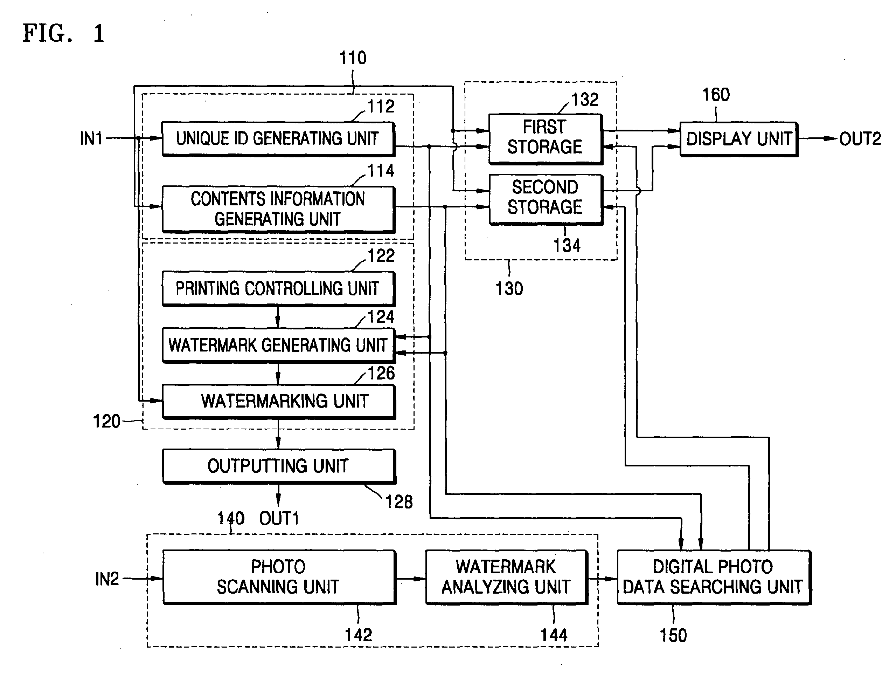

FIG. 1 is a block diagram of a digital photo management apparatus according to an embodiment of the present invention. The digital photo management apparatus includes an attribute information generating unit 110, an attribute information inserting unit 120, a storage unit 130, a reading unit 140, a digital photo data searching unit 150, and a display unit 160.

The attribute information generating unit 110 and the attribute information inserting unit 120 configure an image forming apparatus which makes a photo used in the present invention. That is, the digital photo management apparatus searches photo data related to a photo generated by the operations of the attribute information generating unit 110 and the attribute information inserting unit 120 from the storage unit 130 and displays an image of the searched photo data according to a user's intentions.

In more detail, the attribute information generating unit 110 generates a predetermined attribute information regarding given photo data. The attribute information is identifiable information that distinguishes the given photo data from other photo data by indicating characteristics information of the given photo data.

The photo data denotes data composing a photo when the photo is converted into a data format recognizable by a computer. The given photo data denotes photo data provided from the outside.

For example, the given photo data may be photo data provided via an USB cable, or photo data received via a network such as an e-mail transmission, an FTP transmission, and a P2P transmission. An IN1 denotes the given photo data.

The attribute information generating unit 110 can generate a predetermined unique ID as the identifiable information. In this case, the attribute information generating unit 110 acts as an unique ID generating unit 112. The unique ID can be the name of the photo data. That is, the unique ID of the photo data is made to designate only the photo data among the plurality of photo data. The attribute information generating unit 110 can randomly generate the unique ID, but preferably, generates the unique ID that is somewhat related to the contents of the photo data.

That is, the attribute information generating unit 110 preferably generates unique IDs so that a relevance between two photo data among the given photo data becomes a relevance between unique IDs of each of the two photo data.

For example, preferably, the unique ID is generated to include information on the time photo data was generated, information on the place an image of the photo data was taken, or information on a photographed person in an image of the photo data. The unique ID is preferably in binary numbers. In addition, the unique ID preferably has a predetermined number of bits like 000100.

The attribute information generating unit 110 can generate contents information as the attribute information. In this case, the attribute information generating unit 110 acts as a contents generating unit 114. Contents information is information regarding the contents of a given photo data. For example, the contents includes information on the time photo data was generated, information on the place an image of the photo data was taken, or information on a photographed person in an image of the photo data.

As described above, the unique ID can be generated to include contents information of the photo data, but the unique ID is distinguishable from the contents information. In other words, the unique ID can be generated to include the contents information, or can be randomly generated just as a mark. Here, even if the unique ID includes the contents information, the unique ID is not the contents information itself, rather is a predetermined code of the contents information.

The attribute information generating unit 110 can generate the contents by analyzing the given photo data and extracting the contents, or can generate the contents by bypassing the contents given from the outside.

If the attribute information generating unit 110 generates the contents by bypassing the contents given from the outside, the attribute information generating unit 110 preferably includes a user interface (not shown).

Here, the user interface displays images of the given photo data so that a user can see the images, and the user can input predetermined information the photo data can have into the user interface after seeing the displayed images. In this case, the attribute information generating unit 110 outputs the input predetermined information as the contents information.

On the other hand, the attribute information generating unit 110 can generate both the unique ID and the contents information.

The attribute information inserting unit 120 inserts the contents information generated by the attribute information generating unit 110 in the given photo data. In addition, the attribute information inserting unit 120 prints the photo data including the attribute information on a print medium, thereby prints a photo. In this case, the attribute information inserting unit 120 is preferably included in an image forming apparatus such as a laser printer and an inkjet printer.

OUT 1 may mean "a photo data including the attribute information" generated by the attribute information inserting unit 120, or may mean a printed photo including "the photo data including the attribute information."

Still, the attribute information inserting unit 120 may only insert the attribute information in the photo data and an image forming unit (not shown), further included in the attribute information inserting unit 120, may print the photo by printing the photo data including the attribute information on the print medium. In this case, the image forming unit is preferably included in the image forming apparatus, and the attribute information inserting unit 120 may or may not be included in the image forming apparatus.

However, hereinafter, it is assumed that the attribute information inserting unit 120 also performs the image forming operation for the convenience of explanation.

The attribute information inserting unit 120 inserts the attribute information in the photo data as a type of an authentication code.

Preferably, the attribute information inserting unit 120 watermarks the attribute information and inserts the attribute information in the give photo data. Watermarking is a technique introduced to prevent illegal copying, and is used not only for deterring illegal copying of various copyright contents information but also for preventing illegal copying of digital contents information. The watermarking technique usable by the attribute information inserting unit 120 includes a least significant bit (LSB) modulation technique. In more detail, one of the usable watermarking techniques can be found in *Digital Signal Processing in Multimedia Systems* (I. J. Cox, M. L. Miller, J. M. H. Linnartx, and T. Kaller, 1999, Marchell Dekker Inc., pp. 461-485).

If the attribute information is watermarked and inserted in the photo data, the user cannot check the attribute information inserted in the printed photo with the naked eye. That is, when looking at the photo having the attribute watermarked information, the image of the photo data is not affected by the attribute watermarked information.

Thus, the attribute information can exist both in the image portion of the photo and in the blank portion of the photo. In other words, the attribute information can exist uniformly throughout the entire image of the photo using techniques like watermarking technique. As a result, even if a portion of the photo generated by the attribute information inserting unit 120 gets damaged by being ripped or scratched, the attribute information of the photo still remains.

The operation of the attribute information inserting unit 120 can be described as follows. The attribute information inserting unit 120 includes a printing controlling unit 122, a watermark generating unit 124, and a watermarking unit 126. The printing controlling unit 122 commands operation of the watermark generating unit 124. The watermark generating unit 124 that received the command encodes the unique ID generated from the unique ID generating unit 112 or the contents information generated from the contents information generating unit 114, and generates a watermark. Then, the watermarking unit 126 inserts the watermark in the given photo data IN1. Consequently, the watermarking unit 126 generates a photo data with the watermark inserted therein. The attribute information inserting unit 120 may further include an outputting unit 128. In this case, the outputting unit 128 generates a photo including the attribute information by printing the photo data generated by the watermarking unit 126 on a print medium. Here, OUT 1 may mean the photo data generated by the watermarking unit 126, or the photo generated by the outputting unit 128.

The storage unit 130 stores the attribute information generated by the attribute information generating unit 110 and the given photo data. Preferably, the storage unit 130 separately stores the attribute information and the given photo data, and the stored photo data and the attribute information are matched on a one-on-one basis. To do so, preferably, the storage unit 130 further includes a mapping unit (not shown). The mapping unit buffers the given photo data and the attribute information generated by the attribute information generating unit 110 and transmits them to the storage unit 130. Generally, the give photo data reaches the mapping unit faster than the attribute information of the photo data. This is because the attribute information is generated by the attribute information generating unit 110, and thus the attribute information reaches the mapping unit after a predetermined time delay.

Therefore, if the storage unit 130 does not further include the mapping unit, the photo data stored in the storage unit 130 and the attribute information of the photo data can be mismatched. However, by including the mapping unit, the photo data IN1 and the attribute information of the photo data can be simultaneously transmitted to the storage unit 130, and accordingly, the storage unit 130 can store the rightfully matched photo data and its attribute information.

Consequently, the mapping unit matches the photo data and its attribute information on a one-on-one basis and transmits them to the storage unit 130. Thus, even if the photo data stored in the storage unit 130 and the attribute information of the photo data are separately stored in a hardware device, both the photo data and its attribute information can be organically connected.

The storage unit 130 may include a first storage 132 and a second storage 134. Here, the first storage 132 stores the unique ID generated by the unique ID generating unit 112 and the given photo data IN1. Similarly, the second storage 134 stores the contents information generated by the contents information generating unit 114 and the give photo data IN1.

Meanwhile, the attribute information generating unit 110 may be included in a predetermined user PC, or may be included in the image forming apparatus together with the attribute information inserting unit 120.

If the attribute information generating unit 110 is included in the user PC, preferably, the user PC is connected to the image forming apparatus having the attribute information inserting unit 120 and a network to provide a code to the image forming apparatus.

In addition, the storage unit 130 may or may not be included in the image forming apparatus including the attribute information inserting unit 120.

Meanwhile, the user may create a photo album by collecting predetermined digital photos generated by the attribute information inserting unit 120. The digital photos collected by the user are usually only a portion of the vast amount of photo data the user has.

The user while looking at the photo album may wish to search photo data related to a certain photo the user is interested in among the photo data stored in the storage unit 130, and at here, the reading unit 140 and the digital photo data searching unit 150 are operated.

The reading unit 140 reads a predetermined digital photo generated by the attribute information inserting unit 120. The reading unit 140 may read the attribute information printed together with the given digital photo, or may read the image of the given digital photo. The attribute information may be the unique ID or the contents information.

IN2 is a digital photo given to the reading unit 140 including predetermined attribute information. If OUT1 denotes a photo in which photo data including the attribute information is inserted, IN2 may be OUT1.

The reading unit 140 may be a scanner or a camera. If the reading unit 140 is a scanner, the reading unit 140 performs the reading operation by scanning the given digital photo. Similarly, if the reading unit 140 is a camera, the reading unit 140 performs the reading operation by photographing the given digital photo.

The operation of the reading unit 140 can be described as follows. The reading unit 140 may include a photo scanning unit 142 and a watermark analyzing unit 144. The photo scanning unit 142 scans a given photo IN2. Meanwhile, the watermark analyzing unit 144 analyzes the watermark inserted in the photo IN2 among the scanned data.

The digital photo data searching unit 150 searches predetermined photo data by reading out the stored photo data which has an attribute information with a pre-set degree of association with the detected attribute information as an address in the storage unit 130. Here, the pre-set relatedness may be determined by the user, or may be determined by software of a computer. As a result, the photo data searching unit 150 searches photo data related to the attribute information read by the reading unit 140 among the photo data stored in the storage unit 130.

That is, if the attribute information read by the reading unit 140 is an unique ID, the photo data searching unit 150 reads out the unique ID having a degree of association determined by the user with the read unique ID from the storage unit 130. In addition, the photo data searching unit 140 reads out the stored photo data from the storage unit 130 matched to the read out unique ID. As a result, the photo data searching unit 150 can search predetermined photo data related to the digital photo given to the reading unit 140.

Here, the attribute information generating unit 110 preferably generates the unique ID to have a predetermined relation with the given photo data IN1. That is, as described above, the degree of association of images of two photo data among the given photo data preferably correlate with the degree of association of the unique IDs of the two photo data.

If the attribute information generating unit 110 has generated the unique ID to have a predetermined relation with the given photo data IN1, predetermined photo data read out by the photo data searching unit 150 are photo data having a predetermined relation to a given photo IN2. In particular, if the attribute information generating unit 110 generates the unique ID to have contents information of the given photo data In1, the photo data read out by the photo data searching unit 150 are photo data having similar contents information with the given photo IN2.

A unique ID read by a predetermined unique ID having a degree of association within a predetermined range can also be said that the predetermined unique ID has a distance relation within the predetermined range with the read unique ID, provided that the distance relation and the degree of association are in inverse proportional to each other.

For example, if the unique ID is composed of binary numbers having a predetermined number of bits, the distance relation between two unique IDs is the a number of bits that has different corresponding bits, and the degree of association between the two unique IDs is a number of bits that has the same corresponding bits. In other words, if a unique ID stored in the storage unit 130 is "000100," and a read unique ID is "000110," the distance relation between the two unique IDs can be said to be "1." Since there is only one bit difference between "000100" and "000110," the degree of association of the two unique IDs is "5." Consequently, the read unique ID is "000110" and if the photo data searching unit 150 searches photo data having a unique ID of which the degree of association with the read unique ID is at least 6, the photo data searching unit 150 reads out photo data having unique ID such as "000101," "000001," and "000101."

As such, the photo data searching unit 150 can search predetermined photo data by comparing unique IDs, but can also search photo data by comparing contents information, as described below.

That is, the photo data searching unit 150 reads out contents information having a degree of association determined by the user with contents information read by the reading unit 140 from the storage unit 130, reads out photo data stored matched with the read contents information from the storage unit 130. The read-out photo data is a searched photo data. The searched photo data shows images similar to the contents information of the image of the photo data read by the reading unit 140. Preferably, the photo data searching unit 150 puts different weight depending on the types of the contents information and indicates the degree of association in numeric values, and reads predetermined photo data. The degree of association between the contents information is inverse proportional to the distance relation between the contents information.

For example, assume that contents information include information regarding when the photo data was generated and information on a person photographed in an image of the photo data. In this case, the degree of association is inverse proportional to the difference between the date, and proportional to the similarity of the photographed persons. The similarity of the photographed persons means the degree of similarity between photographed persons and a certain person, and is preferably set in advance. For example, the degree of similarity between "me" and "parents" can be set as "3," between "me" and "siblings" can be set as "2," and between "me" and other persons can be set as "1."

Assume that a photo given to the reading unit 140 was generated on January 28, 2004, and was a photo of "me." In addition, assume that a photo photographed on January 30, 2004 of "mother" (hereinafter referred to as photo data a) is stored in the storage unit 130 and a photo photographed on January 29, 2004 of "colleagues" (hereinafter referred to as photo data b) is stored in the storage unit 130.

In this case, the photo data related more the read photo data regarding the date contents information is the photo data b, whereas, the photo data related more to the similarity of the photographed persons contents information is the photo data a. The degree of association between the read photo and the photo data a is 3+1/2=3.5 and the degree of association between the read photo and the photo data b is 1+1/1=2. In other words, the photo data related more to the read photo is photo data a. Here, the numerator denotes the degree of similarity of the person with "me" and the denominator denotes the difference in the photographed dates.

However, the user can assign a different weight to each of the contents information, and if the user assign a higher weight to the date contents information instead of the degree of similarity between photographed persons contents information, a predetermined weight can be added to the date contents information. For example, if an additional weight of "6" is added to the date contents information, the degree of association between the read photo and the photo data a is 3+1/(1/3)=6, and the degree of association between the read photo and the photo data **b** is 1+1/(1/6)=7. In this case, the photo data related more to the read photo is photo data **b.**

As such, the photo data searching unit 150 can compare the degree of association of the images by comparing the degree of association of the contents information, and accordingly search photo data. However, the photo data can also be searched by directly comparing the image of the given photo with the image of the stored photo data. Directly searching the degree of relation of the images usually takes more time compared to when searching the photo data by comparing the degree of relation of the contents information.

The degree of association of the read image and the stored photo data is determined by comparing pixel values of the image read by the reading unit 140 through directly comparing the degree of association of the image and pixel values corresponding to the stored photo data, and a method of reading a predetermined photo data is suggested. Here, the reading unit 140 reads the image of the given photo, not the contents information of the given photo. For example, assume that an image **A** and an image **B** are each composed of 1,000 pixels, and each pixel has 0 through 255. In this case, when comparing the degree of relation between the image **A** and the image **B,** a predetermined standard needs to be pre-set. Here, the predetermined standard is, for example, setting the degree association as "1" if the total number of pixels that have a difference between the pixel values that is less than 5 pixels is between 80-90% from the total number of pixels when the comparison result of the pixel values exist on the same location, and setting the degree of association as "2" if the total number of pixels that have a difference between the pixel values that is less than 5 pixels is between 90-100% from the total number of pixels when the comparison result of the pixel values exist on the same location.

The photo data searching unit 150 calculates the difference between the pixel value of the read data of the given photo and the value of a corresponding pixel in the stored photo data. In addition, the photo data searching unit 150 reads out photo data from the storage unit 130, the photo data having a difference below a predetermined value and the photo data having more than the number of pixels determined by the user among the total pixel number which make up one photo data. Here, the predetermined value is preferably set in advance, and is preferably as small as possible.

The display unit 160 displays the image of the photo data read out by the photo data searching unit 150. In more detail, the display unit 160 displays an image of the photo data having predetermined numeric values regarding the degree of relation among the read out photo data. OUT2 indicates an image the display unit 160 displays.

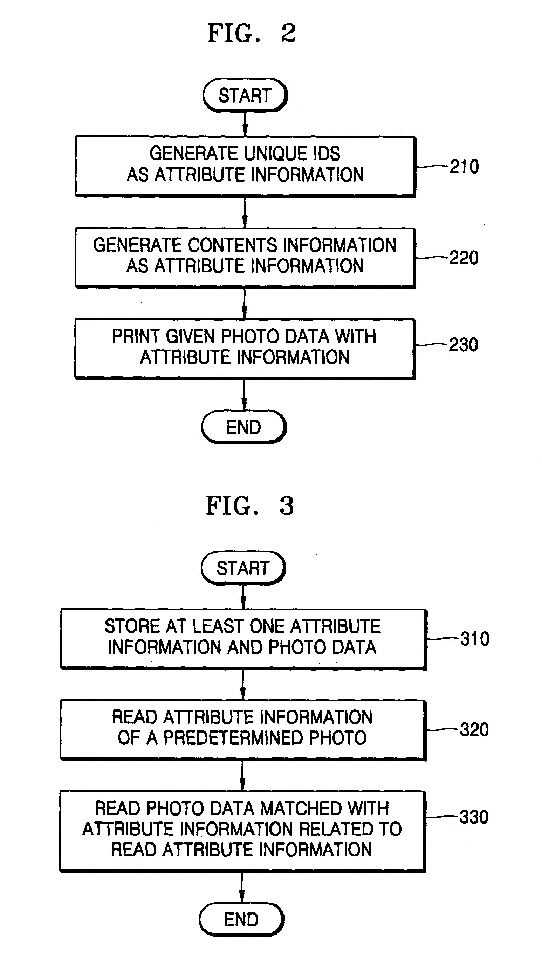

FIG. 2 is a flow chart illustrating a method of printing a digital photo according to an embodiment of the present invention. It is composed of code generating operation (210 and 220) and printing operation (230).

The attribute information generating unit 110 generates unique IDs regarding given photo data (210) and generates contents information (220).

The attribute information inserting unit 120 inserts the attribute information in the given photo data, and prints the photo data including the attribute information on a print medium, thereby generating a photo (230).

FIG. 3 is a flow chart illustrating a method of searching a digital photo according to an embodiment of the present invention, compose of storing operation (310), reading operation (320), and searching operation (330).

The storage unit 130 stores given photo data as well as attribute information such as unique IDs and contents information per each of the given photo data (310).

The reading unit 140 reads an unique ID of a photo generated by the attribute information inserting unit 120 (320), and reads out the photo data matched to the unique ID having a degree of association determined by the user with the read unique ID from the storage unit 130 (330), thereby searching predetermined photo data.

In addition, the reading unit 140 reads contents information of a photo generated by the attribute inserting unit 140 (320), and reads out the photo data matched to the contents information having the degree of association determined by the user with the read contents information from the storage unit 130 (330), thereby searching predetermined photo data.

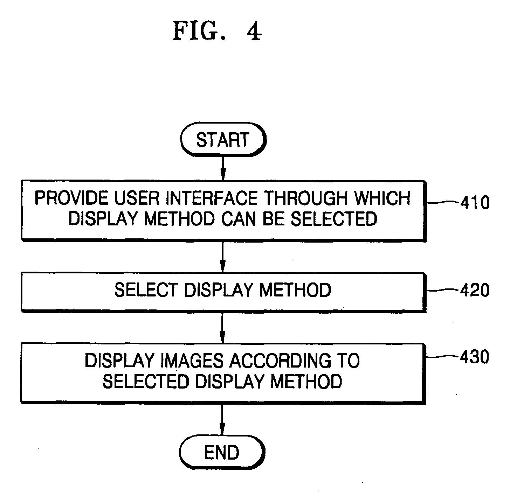

FIG. 4 is a flow chart illustrating a method of displaying a digital photo according to an embodiment of the present invention. The method includes a displaying operation (410 through 430) of images of read photo data.

The display unit 160 provides a user interface through which a display method of images of searched photo data can be displayed (410). The display unit 160 receives a selection of the display method from the user (420), and displays the images according to the selected display method (430).

As describe above, a digital photo managing apparatus and method, and a computer recording medium storing a computer program for executing the method of the present invention can read predetermined photo data despite damage to a portion of a digital photo, easily search photo data related to photo data of the digital photo, and display images of the searched photo data according to the intensions of a user.

In addition, according to the digital photo managing apparatus and method, and the computer recording medium storing the computer program for executing the method, when the user desires to find photo data related to a specific photo, the user does not need to search through all the photo data in the database one by one. Instead, the user can quickly search such photo data.

Furthermore, the digital photo managing apparatus and method, and the recording medium readable by computer storing computer program store digital photos in hardware and provide an apparatus and method appropriate for a common photo management of the user who looks at photo data by searching them in the future.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion. Also, functional programs, codes, and code segments for accomplishing the present invention can be easily construed by programmers skilled in the art to which the present invention pertains.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A digital photo managing apparatus comprising:
an attribute information generating unit which is arranged to generate predetermined attribute information for each given photo data;
a storage unit which is arranged to store the attribute information and the given photo data by having the attribute information as an address;
an attribute information inserting unit which is arranged to insert the attribute information in the given photo data, and to print the photo data including the attribute information to generate a photo;
a reading unit which is arranged to read the photo and to detect the attribute information; and
a photo data searching unit which is arranged to read out the stored photo data which has an attribute information with a pre-set degree of association with the detected attribute information as an address from the stored photo data.

2. The digital photo managing apparatus of claim 1, wherein the attribute information generating unit is arranged to generate unique IDs as the attribute information.

3. The digital photo managing apparatus of claim 2, wherein the degree of association between the unique IDs of each of the given photo data is determined to be proportional to the degree of association between the images of each of the given photo data.

4. The digital photo managing apparatus of claim 1, 2 or 3, wherein the attribute information generating unit is arranged to generate contents information of the given photo data, as the attribute information.

5. The digital photo managing apparatus of claim 4, wherein the contents information comprises at least one of information regarding date the photo data was generated, information related to location shown in an image of the photo data, information regarding photographed person in an image of the photo data, and information related to location in which the photo data is stored in a storing unit.

6. The digital photo managing apparatus of claim 4, wherein the attribute information generating unit is arranged to analyze the given photo data and extract the contents information.

7. The digital photo managing apparatus of claim 4, wherein the contents information is input information given from the outside.

8. The digital photo managing apparatus of any of claims 4 to 7, wherein the photo data searching unit is arranged to put different weight on the contents information depending on the types of the contents information, to indicate the degree of association in numeric values, and to read out predetermined photo data.

9. The digital photo managing apparatus of any preceding claim, wherein the attribute information inserting unit is arranged to watermark and to insert the attribute information in the given photo data.

10. The digital photo managing apparatus of any preceding claim, further comprising a display unit which is arranged to display an image of at least one of the read out photo data.

11. A digital photo managing method comprising:
generating predetermined attribute information for each of the given photo data;
storing the attribute information and the given photo data by having the attribute information as an address;
inserting the attribute information in the given photo data, and generating a photo by printing the photo data including the attribute information;
detecting the attribute information by reading the photo; and
reading out the stored photo data which has an attribute information with a pre-set degree of association with the detected attribute information as an address from the stored photo data.

12. The digital photo managing method of claim 11, wherein in the reading the stored photo data, different weight are assigned to the contents information depending on the types of the contents information, the degree of association is indicated in numeric values, and predetermined photo data is read out.

13. The digital photo managing method of claim 11 or 12, further comprising displaying an image of at least one of the read out photo data.

14. The digital photo managing method of claim 13, wherein the displaying of the at least one image comprises:
providing a user interface through which a display method is selectable; and
displaying the images of the read out photo data according to the selected display method.

15. A computer recording medium storing a computer program for performing a digital photo managing method according to any of claims 11 to 15.
